Europäisches Patentamt

European Patent Office

Office européen des brevets

(19)

(11) **EP 0 922 982 A2**

(12) **EUROPÄISCHE PATENTANMELDUNG**

(43) Veröffentlichungstag:
16.06.1999 Patentblatt 1999/24

(51) Int. Cl.⁶: **G02B 7/00**

(21) Anmeldenummer: 98121443.0

(22) Anmeldetag: 11.11.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 13.12.1997 DE 19755483

(71) Anmelder:
• Carl Zeiss
89518 Heidenheim (Brenz) (DE)
Benannte Vertragsstaaten:
DE FR IE IT NL

• Carl-Zeiss-Stiftung trading as Carl Zeiss
89518 Heidenheim (Brenz) (DE)
Benannte Vertragsstaaten:
GB

(72) Erfinder:
• von Nessen-Lapp, Kerstin
89547 Gerstetten-Dettingen (DE)
• Trier, Bernhard
73430 Aalen (DE)
• Trunz, Michael
73479 Ellwangen (DE)

(54) **Verbundener Körper**

(57) Die Erfindung betrifft einen verbundenen Körper, welcher zumindest aus zwei Körpern zusammengefügt ist, dessen erster Körper aus einem ersten Material und dessen zweiter Körper aus einem zweiten Material besteht, bei welchem jeder der beiden Körper über mindestens eine Verbindungsfläche verfügt und bei welchem sich die Verbindungsflächen gegenüberliegen, und bei welchem die beiden Körper durch mindestens eine Klebverbindung miteinander verbunden sind.

Erfindungsgemäß ist auf mindestens einer der beiden Verbindungsflächen mindestens eine Ausnehmung für einen Ausgleichskörper aus einem dritten Material angebracht und dieser Ausgleichskörper ist mit mindestens einer Klebestelle bzw. Klebespalt mit beiden Körpern verbunden, wobei ein Kleber für eine Klebeverbindung zwischen dem Ausgleichskörper und den beiden Körpern an der Klebestelle sorgt.

FIG. 3

**Beschreibung**

Die Erfindung betrifft einen verbundenen Körper, welcher zumindest aus zwei Körpern zusammengefügt ist, dessen erster Körper aus einem ersten Material und dessen zweiter Körper aus einem zweiten Material besteht, bei welchem jeder der beiden Körper über mindestens eine Verbindungsfläche verfügt und bei welchem sich die Verbindungsflächen gegenüberliegen, und bei welchem die beiden Körper durch mindestens eine Klebverbindung miteinander verbunden sind.

Bei gewissen Anwendungen (insbesondere bei der Herstellung von größeren Körpern aus mehreren Einzelkörpern) darf der herzustellende Körper nach der Herstellung (vorzugsweise an seinen verspiegelten Flächen, an Meßflächen oder an Auflageflächen für andere Bauteile) nur minimale Deformationen (der erlaubt Deformationsbereich liegt dabei im Nanometerbereich) aufweisen. Dabei ist nicht nur die Größe des herzustellenden Körpers sondern insbesondere auch seine Form relevant (insbesondere inneren Kanten). Die Verwendung dieser Körper erfolgt bevorzugt in Bereichen, in denen Nanometer eine relevante Größe sind (z.B. Mikroskopie, Astronomie, usw.).

Aus dem Stand der Technik der Feinfügetechnik sind im wesentlichen zwei Methoden bekannt, um zwei Körper fest miteinander zu verbinden:

a) Beim Ansprengen werden optische Oberflächen durch die van der Waalsschen Kräfte miteinander verbunden. Dabei wird das Ansprengen hauptsächlich für kraftschlüssige, vorübergehende Verbindungen in der Fertigung verwendet.

Nachteilig bei diesem Verfahren ist, daß sich zwei durch Ansprengung verbundene Teile leicht durch entsprechende, die Verbindungskanten benetzende Flüssigkeiten lösen lassen. Auch ist die Ansprengung nicht unbedingt erschütterungsfest.

In der Produktion wird das Ansprengen als dauerhafte Verbindung für kleine optische Elemente mit mm-Abmessungen verwendet. Große Elemente mit cm-Abmessungen können so nicht mit der für eine dauerhafte Verbindung nötigen Sicherheit verbunden werden.

Zur Verbesserung und Sicherung der Ansprengung kann mittels Sicherungslack und/oder Kitraupe außerhalb der Ansprengflächen die Beständigkeit der Verbindung vergrößert, jedoch nicht perfektioniert werden.

b) Beim spannungsarmen Kleben werden die Klebestellen üblicherweise durch geschickte Gestaltung der Klebestellen (Optimierung des Klebespaltes und der Klebepads) optimiert. Bei dieser Optimierung werden grundlegende Vorgaben (Klebespalt 1/10 mm, Pads 6x6 mm) gemäß dem Stand der Technik berücksichtigt.

Geklebte Teile haben den großen Nachteil, daß nicht unbedingt eine kraft- und formschlüssige Verbindung möglich ist. Das unvermeidbare Kriechen der Verbindung, und die damit verbundene Dejustierung der Teile zueinander, erzeugt ebenfalls in manchen Anwendungen entsprechende Probleme.

Aus der DE 37 11 466 ist eine Vorrichtung zur Verbindung von mindestens zwei Körpern bekannt, bei welcher mittels eines Zugankers miteinander verbunden werden, ohne daß thermische Zwangskräfte auftreten. Diese Vorrichtung hat den Nachteil, daß die beiden Körper nach der Verbindung nachgearbeitet werden müssen, da der Zuganker an den Verbindungsflächen starke Kräfte erzeugt. Dafür ist die Verbindung sehr stabil.

Aus der DE 39 34 546 ist ein Vorrichtung zur klebenden Verbindung zweier Körper mittels eines Zwischenstücke bekannt, wobei aber die Zwischenstücke bis an die Oberflächen der beiden Körper geführt sind und die Oberfläche in ihrem Bereich nicht genutzt werden kann.

Es ist die Aufgabe der Erfindung, eine Verbindung zwischen größeren Körpern, insbesondere mit niedrigem thermischen Ausdehnungskoeffizienten (z.B. Silikat, Keramik, Invar, usw.) zu entwickeln, die hinreichend prozeßsicher und kraftschlüssig ist sowie Toleranzforderungen im nm-Bereich erfüllt.

Diese Aufgabe wird durch den kennzeichnenden Teil des ersten Patentanspruchs gelöst.

Der Einsatz eines in den beiden zu befestigenden Körpern (d.h. in ihrem Inneren umschlossen von den beiden Körpern) angeordneten Ausgleichselementes wurde bisher noch nicht realisiert und ist auch nicht naheliegend, da erst durch diesen Ausgleichskörper eine partielle bis totale Entkopplung der Klebungsschrumpfung erfolgen kann, ohne daß dieser außen störend in Erscheinung tritt.

Die Neuheit und die Erfindungshöhe sind jedoch nicht nur in der bloßen Kombination der Verbindungstechniken zu sehen, sondern in der Tatsache, daß es dadurch nur zu sehr geringen bis nicht mehr meßbaren Verformungen der verbundenen Körper führt.

Dabei kann eine geschickte Form der Klebestelle sowie eine geschickte Auswahl der Anordnung der Klebestelle innerhalb der Verbindungsflächen die vorteilhaften Auswirkungen durch den Ausgleichskörper unterstützen.

Mit der neuen Verbindung ist es möglich, optische Elemente mit großen Abmessungen, d.h. größer als 10 cm form- und kraftschlüssig miteinander zu verbinden (Es fanden Versuche statt, bei welchen die zu verbindenden Flächen eine Längenausdehnung von mehr als 40 cm hatten.). Das Kriechen des Klebers entfällt. Die nötige Festigkeit wird durch die Klebestellen sichergestellt.

Auf Grund der geringen Deformationen der verbundenen Körper durch die Verklebung eignet sich der Einsatz insbesondere in optischen Geräten, welche mit kleinen Wellenlängen arbeiten. Hier sei beispielhaft ein Positioniertisch (mit Bewegungen auf der X-, Y- und manchmal auch in Z-Achse) genannt, wie er insbesondere in UV-Mikroskopen benötigt wird.

Dabei sollten vorzugsweise alle verwendeten Körper (auch der Ausgleichskörper) aus ein und demselben Material bestehen, um thermische Spannungen zu vermeiden.

Die Erfindung wird im folgenden anhand eines Ausführungsbeispiels unter Bezugnahme auf die beiliegenden Figuren, näher erläutert, wobei das nachfolgende Beispiel keinen abschließenden Charakter für die Erfindung hat und weitere vorteilhafte Ausgestaltungen der Erfindung beinhaltet.

Es sind zu sehen in

Figur 1      eine erste Ausgestaltung der erfindungsgemäßen Klebestelle;

Figur 2      eine Modifikation der ersten Ausgestaltung der erfindungsgemäßen Klebestelle; und

Figur 3      eine zweite Ausgestaltung der erfindungsgemäßen Klebestelle.

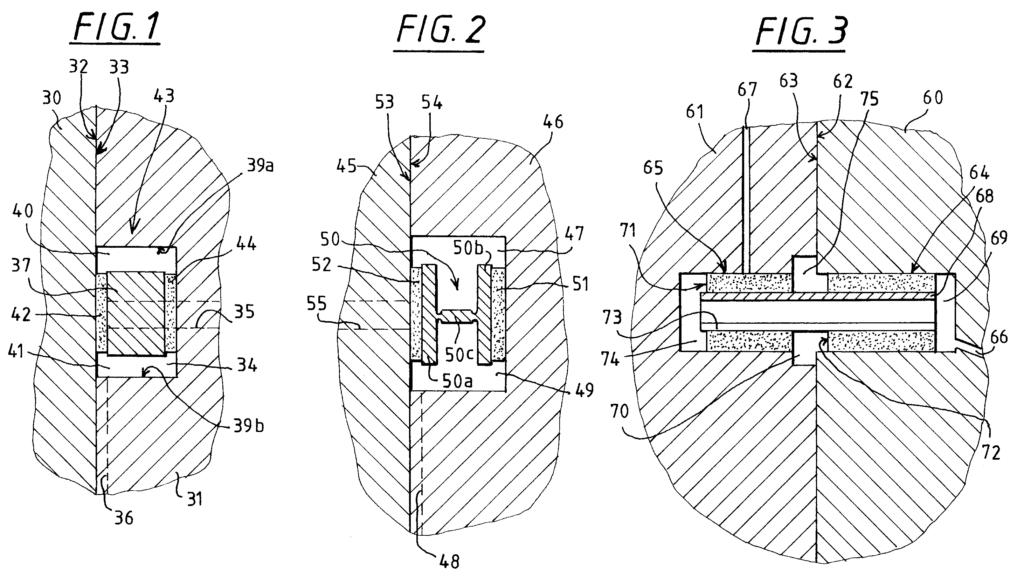

Durch die in den Figuren 1 und 2 dargestellten Klebestellen kann die Krafteinwirkung durch die Klebung und die sich daraus ergebenen Deformationen auf rund ein Zehntel von anderen Verbindungstechniken reduziert werden.

Die nachfolgend beschriebene Verbindung zwischen zwei Körpern (30, 31) verwendet ein spannungsreduzierendes Element (37) (welches auch Ausgleichskörper genannt werden kann), welches zwischen zwei Klebungen eingebracht wird und welches die durch die Schrumpfung des Klebers verursachten Kräfte in Form von Spannungen in sich aufnimmt. Die so erhaltene Klebeverbindung verursacht erheblich weniger Verformungen der feingefügten Körpern (30, 31) als bei den nach dem Stand der Technik bekannten Verbindungstechniken.

Der physikalische Hintergrund für die durch eine Klebung in den gefügten Körpern (30, 31) verursachte Verformung liegt im wesentlichen in der Schrumpfung des Klebers begründet. Die Längenänderung in einer der beiden Klebeverbindungen kann im wesentlichen mit folgender Formel beschrieben werden:

$$\varepsilon = \delta l / l_0$$

mit der Dehnung $\varepsilon$, der Längenänderung $\delta l$ und der Länge vor der Änderung $l_0$.

$$F/A = E^* \varepsilon$$

mit der Kraft F, der Klebefläche A und dem Elastizitätsmodul E. Daraus ergibt sich

$$F/A = E^* \delta l / l_0 \rightarrow F = E^* A^* \delta l / l_0 \rightarrow F \sim E^* A$$

Wenn nun F, und damit die Kraft auf die Klebestelle (43), möglichst klein sein soll, dann muß A oder E verkleinert werden, da $\delta l$ durch die Schrumpfung des Klebers vorgegeben und $l_0$ durch den bzw. die beiden Klebespalte (41, 42) (deren Dicke nicht beliebig reduziert werden kann, z.B. durch die Notwendigkeit der Einbringung des Klebers) vorgegeben ist. Die Fläche A kann nicht beliebig verkleinert werden und wird im wesentlichen durch die benötigten Haltekräfte festgelegt. Der Elastizitäts-modul ist durch die zu klebenden Körper (30, 31) festgelegt.

Um nun trotzdem die Kraft verringern zu können, wird ein zusätzlicher Körper (37) zwischen den beiden zu verbindenden Körpern (30, 31) verwendet. Bei diesem Körper (37), welcher zwischen zwei Klebestellen in einen Hohlraum (34) zwischen die zu verklebenden Körper (30, 31) eingebracht wird, läßt sich die Querschnittsfläche und/oder der Elastizitätsmodul frei wählen.

In der Figur 1 ist nun eine konstruktive Lösung unter Verwendung obiger Überlegungen dargestellt.

Die zu verbindenden Körper (30, 31) (welche vorzugsweise aus demselben Material (wegen des thermischen Ausdehnungskoeffizienten) bestehen sollten und z.B. aus Silikat, Keramik oder Invar bestehen) besitzen jeweils eine Verbindungsfläche (32, 33), an welcher sie aneinandergesprengt werden. Vor der Ansprengung wird in einem Körper (31) ein zur Verbindungsfläche (33) hin offener Hohlraum (34) (in der gewünschten Form, z.B. Rechteck- oder Rundzylinder) erzeugt, in welchen zwei Kanäle (35, 36) enden.

Auf den Boden dieses Hohlraums (34) wird ein Ausgleichselement (37) mit einem ersten Klebespalt (44) so eingeklebt, daß zwischen dem Ausgleichselement (37) und den seitlichen Wänden (39a, 39b) des Hohlraums (34) umlaufend ein Luftspalt (40, 41) übrigbleibt. Nachdem das Ausgleichselement (37) in den Hohlraum (34) eingeklebt ist, wird durch den Körper (31) und durch das Ausgleichselement (37) ein erster Kanal (35) gebohrt, welcher später in der Mitte des zweiten Klebespaltes (42) endet und durch welchen die Kleberzufuhr für die zweite Klebestelle am Ausgleichselement (37) erfolgen soll. Seitlich des Luftspaltes (40) ist eine weitere Ausnehmung angebracht, welche im zusammengesprengten Zustand der beiden Körper (30, 31) einen zweiten Kanal (36) bildet.

Nachdem die beiden Körper (30, 31) aneinandergesprengt sind, wird die benötigte Menge Kleber in den ersten Kanal (35) eingebracht und in dem ersten Kanal (35) oberhalb des eingebrachten Klebers ein Gasdruck erzeugt, welcher den Kleber in den zweiten Klebespalt (42) zwischen dem Ausgleichselement (37) und dem Körper (30) treibt. Nach Durchführung der zweiten Verkle-bung sollte sich kein Kleber mehr im ersten Kanal (35) befinden.

Damit die Kräftereduzierung wirklich erfolgt, muß das Ausgleichselement (37), welches die Aufnahme der Zugkräfte bewirken soll, ein wesentlich kleineres E-Modul wie die zu verbindenden Körper (30, 31) haben (möglichst kleiner 50%, vorzugs-weise um 10%).

Durch entsprechende Auswahl des Klebers mit einer möglichst geringen Schrumpfung (kleiner 10%, besser kleiner 3% und noch besser kleiner 1% bzw. kleiner 0,6%) kann man die gewünschte Kräftereduzierung unterstützen.

Selbstverständlich könnte der Kleberzuführungskanal (35) auch durch den zweiten (30) der zu verbindenden Körper (30, 31) den zweiten Klebespalt (42) heranführen und der Entlüftungskanal (36) im Inneren des Körpers (31), weit weg von den Verbindungsflächen (32, 33) angeordnet sein.

In der Figur 2 ist nun eine Modifikation der in der Figur 1 dargestellten Klebestelle (43 in Figur 1) dargestellt. Dabei betrifft die Modifikation im wesentlichen nur die Form des Ausgleichselements (37 in Figur 1) und die Lage des Kleberzuführungskanals (35 in Figur 1).

Wie zur Figur 1 beschrieben, wird in dem einen der zu verbindenden Körper (46) ein Hohlraum (47) und eine Ausnehmung für einen Luftaustrittskanal (48) erzeugt, wobei die Dimensionierung des Hohlraums (47) einen umlaufenden Luftspalt (49) um das einzuklebende Ausgleichselement (50) zwischen diesem und der seitlichen Wand des Hohlraumes (47) sicherstellt. Das Ausgleichselement (50) wird mittels eines Klebers in dem Hohlraum (47) befestigt, wobei der Kleber den ganzen ersten Klebespalt (51) ausfüllt. Danach werden die beiden Körper (45, 46) an den beiden sich gegenüberliegenden Verbindungsflächen (53, 54) so aneinandergesprengt, daß der in dem zweiten Körper (45) angebrachte Klebezuführungskanal (55) möglichst exakt in der Mitte der Klebefläche oberhalb des Ausgleichselements (50) endet. Die Kleberzuführung erfolgt dann wieder wie zur Figur 1 bereits beschrieben, wobei der Kleber auch hier den Klebespalt (52) möglichst vollständig ausfüllen sollte.

Bei diesem Beispiel hat das Ausgleichselement (50), welches zur Aufnahme von Zugkräften und Biegekräften dient, eine umlaufende Querschnittsverringerung unterhalb der zur Klebung verwendeten Klebeplatten (50a, 50b) an den Enden des Verbindungsstegs (50c). Diese Querschnittsverringerung erzeugt den in der Figur 1 beschriebenen Effekt auch dann, wenn der Elastizitätsmodul des Materials des Ausgleichselements (50) genauso oder sogar noch größer ist als der Elastizitätsmodul der zu verbindenden Körper (45, 46).

Aber selbst die mit der Verbindung gemäß Figur 1 oder 2 auftretenden Kräfte zwischen den beiden zu verbindenden Körper können noch zu groß sein. Will man eine Kraft auf die zu verbindenden Körper durch die Klebestelle von nahe Null erreichen, so muß man den Kleber seitlich zwischen den beiden zu verbindenden Körpern und dem Ausgleichselement anbringen. Wie dies realisiert werden kann, ist in der Figur 3 dargestellt.

In der Verbindungsfläche (62) des ersten zu verbindenden Körpers (60) befindet sich ein nach oben hin offener Hohlraum (64) mit dem gewünschten (vorzugsweise kreisrundem) Querschnitt, in dessen Boden ein Entgasungskanal (66) endet.

In diesen Hohlraum (64) wird vor dem Zusammenfügen der beiden zu verbindenden Körper (60, 61) ein längsgeschlitztes, innen hohles Verbindungsrohr (68) seitlich an einem zumindest fast vollständig umlaufenden Klebespalt (72) so angeklebt, daß zum Boden des Hohlraumes (64) noch ein Luftspalt (69) insbesondere kleberfrei bleibt und das Ausgleichselement (68) oberhalb des Bodens des Hohlraumes (64) endet.

In der Verbindungsfläche (63) des zweiten zu verbindenden Körpers (61) befindet sich ebenfalls ein nach oben hin offener Hohlraum (65) mit dem gewünschten (vorzugsweise kreisrunden) Querschnitt, in welchen seitlich, etwa in der Mitte der später zu erzeugenden Verklebung ein Kleberzuführungskanal (67) endet.

Dieser Hohlraum (65) hat an seinem der Verbindungsfläche (63) naheliegenden Ende eine umlaufende Nut (70) mit einem größeren Durchmesser als der Rest des Hohlraumes (65). Diese Nut (70) wird benötigt, um den durch Kapillarkräfte bedingten Kleberfluß zwischen dem Verbindungsrohr (68) und dem zweiten Körper (61) zu stoppen.

Der Durchmesser dieses Hohlraumes (65) ist geringfügig größer als der Hohlraum (64) in dem anderen zu verbindenden Körper (60), um eine nachträgliche Justierung der beiden zu verbindenden Körper (60, 61) zueinander zu ermöglichen.

Nachdem nun die beiden Körper (60, 61) an ihren Verbindungsflächen (62, 63) aneinandergesprengt sind, wird die vorher bestimmte benötigte Menge Kleber in den Kleberkanal (67) gegeben und unter Gasdruck zum Kleberspalt (71) zwischen dem Verbindungsrohr (68) und dem zweiten Körper (61) befördert. Dabei sollte darauf geachtet werden, daß der Kleberkanal (67) in den Hohlraum (65) möglichst auf der gegenüberliegenden Seite des Schlitzes (73) in dem Verbindungsrohr (68) endet. Auch hier endet das Verbindungsrohr (68) oberhalb des Bodens des Hohlraumes (65) im zweiten (61) der zu verbindenden Körper (60, 61), so daß auch hier ein Luftspalt (74) zwischen dem Körper (61) und dem Verbindungsrohr (68) verbleibt. Diese beiden Luftspalte (69, 74) sind wichtig, damit sich vom Verbindungsrohr (68) keine Kräfte auf die Körper (60, 61) übertragen können. Diesem Ziel dient auch der Luftspalt (75) zwischen der Klebestelle (72) zwischen dem ersten Körper (60) und dem Verbindungsrohr (68) und der Klebestelle (71) zwischen dem zweiten Körper (61) und dem Verbindungsrohr (68).

Durch den Schlitz (73) im Verbindungsrohr (68) ist dieses in der Lage, die Deformationen durch die seitlich des Verbindungsrohres (68) angreifende Kleberschrumpfung aufzunehmen, ohne daß dadurch Kräfte auf die Verbindungsflächen (62, 63) zwischen den beiden zu verbindenden Körpern (60, 61) geleitet werden.

Bei all den in den Figuren dargestellten Skizzen ist zu berücksichtigen, daß dort nicht die richtigen Größenverhältnisse dargestellt sind. Insbesondere alle Klebespalte sind sehr viel kleiner als dargestellt, da der Kleber durch die Kapillarkraft in diese Klebespalte hineinfließen soll und ein Klebespalt somit eine Breite von wenigen zehntel Millimetern nicht überschreiten darf.

Als Kleber eignen sich alle Kleber, welche eine möglichst geringe Schrumpfung aufweisen und welche eine sichere Verklebung mit dem Material der zu verbindenden Körper ermöglichen. Für die bevorzugten Materialien Silikat und Keramik sind dies insbesondere Epoxi-Kleber mit einer Schrumpfung von kleiner 3% oder kleiner 0,6%.

Der Kleberzuführungskanal sollte nach der Durchführung der Verklebung vorzugsweise möglichst kleberfrei sein.

Die Klebestellen in den Ansprengflächen zwischen den beiden zu verbindenden Körpern dienen der Verbindung der beiden zu verbindenden Körper miteinander, insbesondere bei starken Beschleunigungen bzw. deren Änderung sicher. Ihre Haltekraft muß also insbesondere erst dann voll wirksam werden, wenn sich die zu verbindenden Körper an ihren Verbindungsflächen voneinander lösen wollen. Dies kann je nach der Geometrie des verbundenen Körpers und zur Lage der Verbindungsflächen relativ zu der bzw. den Beschleunigungsrichtungen unterschiedlich schnell erfolgen. Die Verbindungsflächen können zusätzlich noch durch eine Ansprengung miteinander verbunden sein.

Der Hohlraum zur Aufnahme des Ausgleichselements muß bei den Figuren 1 und 2 nicht in nur einem der beiden Körper ausgebildet sein. Genausogut kann aufgeteilt werden und aus zwei sich möglichst genau gegenüberliegenden Hohlräumen gebildet werden. Diese Modifikation hat aber den Nachteil, daß eine genauere Justierung der beiden zu verbindenden Körper zueinander bei der Ansprengung erfolgen muß. In Sonderfällen könnte aber auch diese Lösung vorteilhaft sein.

Aus Gründen der thermischen Stabilität sollten alle Bestandteile des verbundenen Körpers aus nur einem Material bestehen.

Zur Positionsvermessung des verbundenen Körpers können Teile seiner Oberfläche verspiegelt sein.

**Patentansprüche**

1. Verbundener Körper, welcher zumindest aus zwei Körpern (30, 31; 45, 46; 60, 61) zusammengefügt ist, dessen erster Körper (30; 45; 60) aus einem ersten Material und dessen zweiter Körper (31; 46; 61) aus einem zweiten Material besteht, bei welchem jeder der beiden Körper (30, 31; 45, 46; 60, 61) über mindestens eine Verbindungsfläche (32, 33; 53, 54; 62, 63) verfügt und bei welchem sich die Verbindungsflächen (32, 33; 53, 54; 62, 63) gegenüberliegen, und bei welchem die beiden Körper (30, 31; 45, 46; 60, 61) durch mindestens eine Klebverbindung miteinander verbunden sind, dadurch gekennzeichnet, daß auf mindestens einer der beiden Verbindungsflächen (32, 33; 53, 54; 62, 63) mindestens eine Ausnehmung (34, 47, 64, 65) für einen Ausgleichskörper (37, 50, 68) aus einem dritten Material angebracht ist und daß dieser Ausgleichskörper (37, 50, 68) mit mindestens einer Klebestelle bzw. Klebespalt (42, 44; 51, 52; 71, 72) mit beiden Körpern (30, 31; 45, 46; 60, 61) verbunden ist, wobei ein Kleber für eine Klebeverbindung zwischen dem Ausgleichskörper (37, 50, 68) und den beiden Körpern (30, 31; 45, 46; 60, 61) an der Klebestelle (42, 44; 51, 52; 71, 72) sorgt.

2. Verbundener Körper nach Anspruch 1, dadurch gekennzeichnet, daß die Klebestellen bzw. Klebespalte (42, 44; 51, 52; 71, 72) zwischen den zu verbindenden Körpern (30, 31; 45, 46; 60, 61) und diesem Ausgleichskörper (37, 50, 68) angebracht sind.

3. Verbundener Körper nach Anspruch 1 oder 2, dadurch gekennzeichnet, daß beide Verbindungskörper (30, 31; 45, 46; 60, 61) an jeweils mindestens einer Verbindungsfläche (32, 33; 53, 54; 62, 63) aneinandergesprengt sind und daß die Ausnehmungen der Klebestelle (42, 44; 51, 52; 71, 72) zumindest im wesentlichen in der Ansprengfläche (32, 33; 53, 54; 62, 63) liegend sind.

4. Verbundener Körper nach einem der Ansprüche 1 bis 3, dadurch gekennzeichnet, daß seitlich des Ausgleichskörpers (37, 50) ein Luftspalt (40, 41, 49) angeordnet ist.

5. Verbundener Körper nach einem der Ansprüche 1 bis 4, dadurch gekennzeichnet, daß der Ausgleichskörper (50) aus zwei Klebeplatten (50a, 50b) und einem diese Klebeplatten (50a, 50b) verbindenden Verbindungsstegs (50c) aufgebaut ist, wobei der Querschnitt der Klebeplatten (50a, 50b) größer ist als der Querschnitt des Verbindungsstegs (50c).

6. Verbundener Körper nach einem der Ansprüche 1 bis 3, dadurch gekennzeichnet, daß in jedem der beiden zu verbindenden Körpern (60, 61) für jede Ausnehmung (64, 65) jeweils ein Hohlraum ausgebildet ist, daß in diesen sich gegenüberliegenden Hohlräumen (64, 65) ein Ausgleichselement (68) angeordnet ist und daß jeweils mindestens eine Klebestelle bzw. Klebespalt (71, 72) zwischen Ausgleichselement (68) mit den seitlichen Wänden der beiden Hohlräume (64, 65) angeordnet ist.

7. Verbundener Körper nach Anspruch 6, dadurch gekennzeichnet, daß unterhalb des Ausgleichselements (68) jeweils ein Luftraum (69, 74) angeordnet ist und daß zwischen der Klebestelle (72) zwischen dem ersten Körper (60) und dem Verbindungsrohr (68) und der Klebestelle (71) zwischen dem zweiten Körper (61) und dem Verbindungsrohr (68) ein Luftspalt (75) angeordnet ist.

8. Verbundener Körper nach Anspruch 6 oder 7, dadurch gekennzeichnet, daß das Ausgleichselement (68) ein hohles Verbindungsrohres ist.

9. Verbundener Körper nach Anspruch 6, 7 oder 8, dadurch gekennzeichnet, daß ein Längsschlitz (73) seitlich am Verbindungsrohres (68) angeordnet ist.

10. Verbundener Körper nach Anspruch 9, dadurch gekennzeichnet, daß der Längsschlitz (73) das hohles Verbindungsrohres (68) vollständig aufschlitzt.

11. Verbundener Körper nach einem der Ansprüche 6 bis 10, dadurch gekennzeichnet, daß um den Hohlraum (65) im Körper (61) mit dem Kleberzuführungskanal (67) eine umlaufende Nut (70) angeordnet ist, um den Kleber am Austritt aus dem Klebespalt (71) zu hindern.

12. Verbundener Körper nach einem der Ansprüche 8 bis 11, dadurch gekennzeichnet, daß die Austrittsöffnung des Kleberzuführungskanal (67) auf der gegenüberliegenden Seite des Längsschlitzes (73) angeordnet ist.

13. Verbundener Körper nach einem der Ansprüche 1 bis 12, dadurch gekennzeichnet, daß der verbundene Körper ein Positioniertisch ist.

14. Verbundener Körper nach Anspruch 13, dadurch gekennzeichnet, daß der Positioniertisch in einem optischen Gerät eingebaut ist, welches bei einer Wellenlänge kleiner als 400 nm arbeitet.

15. Verbundener Körper nach Anspruch 14, dadurch gekennzeichnet, daß das optische Gerät ein Mikroskop ist.

FIG. 1

FIG. 2

FIG. 3

7